# EUROPEAN PATENT APPLICATION

(11) **EP 4 692 599 A1**
(43) Date of publication of application: **11.02.2026**
(21) Application number: 23943429.3
(22) Date of filing: 15.12.2023
(51) Int. Cl.: F16H 57/04

(54) **SPEED REDUCER, ELECTRIC DRIVE SYSTEM AND VEHICLE**

(30) Priority: 25.06.2023 CN 202310749664
(71) Applicant: VOYAH Automotive Technology Co., Ltd., Wuhan, Hubei 430109 (CN)
(72) Inventor: LIU, Chunqiang, Wuhan, Hubei 430050 (CN); CHEN, Gang, Wuhan, Hubei 430050 (CN); FANG, Cheng, Wuhan, Hubei 430050 (CN); YANG, Guangming, Wuhan, Hubei 430050 (CN); TANG, Zhiyao, Wuhan, Hubei 430050 (CN); RUAN, Peng, Wuhan, Hubei 430050 (CN); XIE, Mengxiang, Wuhan, Hubei 430050 (CN); ZHOU, Hao, Wuhan, Hubei 430050 (CN); SONG, Ruiqi, Wuhan, Hubei 430050 (CN); GONG, Haiqing, Wuhan, Hubei 430050 (CN)
(74) Representative: Boult Wade Tennant LLP
(86) International application number: PCT/CN2023/139124
(87) International publication number: WO 2025/000956

(57) **Abstract**

A speed reducer (1a), an electric drive system (1), and a vehicle. The speed reducer (1a) includes: a right housing (10), a left housing (20), and a filter assembly (30). The left housing (20) is connected to the right housing (10) to form an oil churning chamber (90), and the end face of the left housing (20) facing away from the right housing (10) is provided with an accommodating cavity (201). The accommodating cavity (201) is in communication with the oil churning chamber (90). The filter assembly (30) is disposed within the accommodating cavity (201), and is detachably connected to the left housing (20). The speed reducer (1a), the electric drive system (1), and the vehicle can improve the space utilization.

## Description

### CROSS-REFERENCE TO RELATED APPLICATIONS

This application claims priority to Chinese Patent Application No. 2023107496647 filed on June 25, 2023, which is hereby incorporated by reference in its entirety.

### TECHNICAL FIELD

The present disclosure relates to the field of vehicle technology, and specifically to a speed reducer, an electric drive system, and a vehicle.

### BACKGROUND

Electric drive systems are increasingly adopting oil cooling systems, which can both dissipate heat from the electric drive systems and lubricate the electric drive systems. Heat dissipation through oil cooling can improve the heat dissipation performance of the motor and increase the efficiency of the assembly. The common lubrication methods for the oil cooling systems generally involve using an oil pump and pipelines to transport lubricating oil to the positions of the motor and the speed reducer that require lubrication. In order to ensure the cleanliness of the lubricating oil, the lubricating oil needs to be filtered through a filter element to filter out impurities, sludge, and the like.

In the related art, the filter element for the lubricating oil is installed in an externally mounted manner, and the housing of the entire filter element is installed outside the housing of the speed reducer. This installation method causes the filter element to occupy a large overall space.

### SUMMARY

In order to solve the above technical problem, the present disclosure provides a speed reducer, an electric drive system, and a vehicle, aiming to at least partially solve the technical problem of a filter element occupying a large space.

The technical solutions of the present disclosure are as follows.

In one aspect, the present disclosure provides a speed reducer, which includes: a right housing, a left housing, and a filter assembly. The left housing is connected to the right housing to form an oil churning chamber. An end face of the left housing facing away from the right housing is provided with an accommodating cavity, and the accommodating cavity is in communication with the oil churning chamber. The filter assembly is disposed within the accommodating cavity and is detachably connected to the left housing.

In another aspect, the present disclosure also provides an electric drive system including the above speed reducer.

In yet another aspect, the present disclosure also provides a vehicle including the above electric drive system.

The beneficial effects of the present disclosure at least include the following.

The left housing is connected to the right housing to form the oil churning chamber, and the end face of the left housing facing away from the right housing is provided with the accommodating cavity. The accommodating cavity is in communication with the oil churning chamber, and the filter assembly is disposed within the accommodating cavity. Thus, when it is necessary to filter lubricating oil, the lubricating oil enters the accommodating cavity from the oil churning chamber and is filtered by the filter assembly within the accommodating cavity. The cavity wall of the accommodating cavity can be used as the outer housing of the filter assembly, and provide installation space for the filter assembly. Compared with an externally-mounted filter element, the filter assembly is accommodated inside the left housing, reducing the space occupied by the filter assembly in the speed reducer, improving the space utilization, and reducing the volume of the right housing.

Since the filter assembly is detachably connected to the left housing, if the filter assembly needs to be replaced after the vehicle has traveled for a specified mileage or a specified time, the old filter assembly can be detached from the left housing and taken out of the accommodating cavity, and then the new filter assembly is placed into the accommodating cavity and connected to the left housing. The operation is simple and convenient. Compared with the externally-mounted filter element, there is no need to replace the outer housing of the externally-mounted filter element, and only the filter assembly needs to be replaced, reducing the replacement cost of the filter assembly.

### BRIEF DESCRIPTION OF DRAWINGS

In order to more clearly illustrate the technical solutions in the embodiments of the present disclosure, the following briefly introduces the drawings required for describing the embodiments. Obviously, the drawings described below are some embodiments of the present disclosure. For persons skilled in the art, other drawings can also be obtained based on these drawings without any creative work.
FIG. 1 is a schematic structural diagram of an electric drive system according to one or more embodiments of the present disclosure.
FIG. 2 is an exploded view of a speed reducer according to one or more embodiments of the present disclosure.
FIG. 3 is an exploded view of a filter assembly in FIG. 1.
FIG. 4 is a schematic structural diagram of the filter assembly in FIG. 3.

In the drawings:
electric drive system 1, speed reducer 1a, drive motor 1b, electronic control structure 1c, right housing 10, left housing 20, accommodating cavity 201, input-shaft mounting position 202, intermediate-shaft mounting position 203, output-shaft mounting position 204, main body 205, mounting member 206, first mounting base 2061, limiting groove 207, oil inlet 208, input-shaft gear set 209a, intermediate-shaft gear set 209b, output-shaft gear set 209c, filter assembly 30, filter member 301, closure member 302, second mounting base 3021, connecting member 40, first limiting member 50, second limiting member 60, sealing member 70, motor housing 80, oil churning chamber 90.

### DESCRIPTION OF EMBODIMENTS

The technical solutions in the embodiments of the present disclosure will be clearly and completely described below in conjunction with the drawings in the embodiments of the present disclosure. Obviously, the described embodiments are only part of the embodiments of the present disclosure, rather than all of the embodiments. Based on the embodiments of the present disclosure, all other embodiments obtained by persons skilled in the art without making any creative work shall fall within the scope of protection of the present disclosure.

It should be noted that all directional indications in an embodiment of the present disclosure are only used to explain the relative positional relationship, motion condition, etc., between various components in a certain specific posture. If this specific posture changes, the directional indications will also change accordingly.

In the present disclosure, unless otherwise clearly specified and limited, the terms "connected", "fixed", etc., should be understood in a broad sense. For example, being "fixed" may be fixedly connected, detachably connected, or formed integrally as one piece. It may be a mechanical connection or an electrical connection; it may be a direct connection or an indirect connection through an intermediate medium, and may also be an internal communication between two elements or an interaction relationship between two elements, unless otherwise clearly defined. For persons skilled in the art, the specific meanings of the above terms in the present disclosure can be understood according to specific circumstances.

In addition, descriptions such as "first", "second", etc., in the present disclosure are only used for descriptive purposes and cannot be understood as indicating or implying their relative importance or implicitly indicating the number of the indicated technical features. Therefore, a feature defined as "first" or "second" may explicitly or implicitly include at least one of such feature. In addition, the technical solutions of the various embodiments can be combined with each other, which however must be based on the fact that persons skilled in the art can implement them. When a combination of technical solutions has mutual contradiction or cannot be implemented, it should be deemed that such a combination of technical solutions does not exist and is not within the scope of protection claimed by the present disclosure.

The technical solutions of the present disclosure will be described below with reference to the accompanying drawings and specific embodiments.

A speed reducer 1a, an electric drive system 1, and a vehicle provided in the embodiments aim to at least partially solve the technical problem of an externally-mounted filter element occupying a large space.

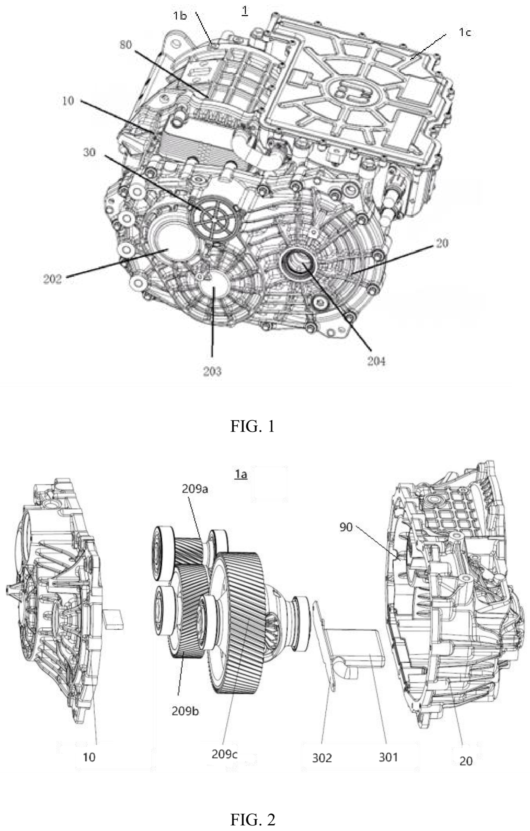

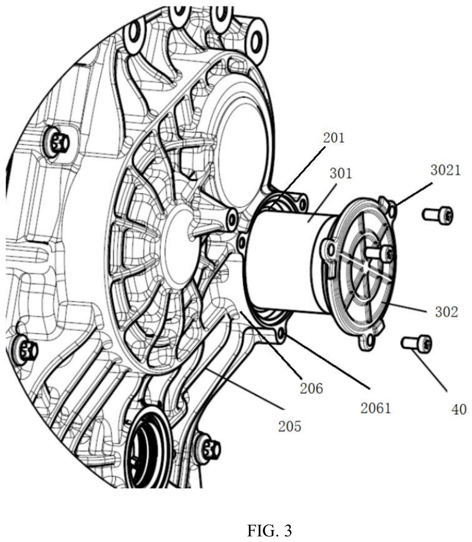

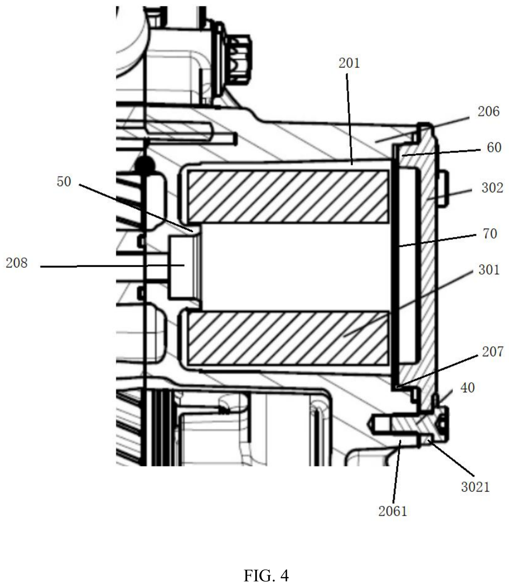

FIG. 1 is a schematic structural diagram of the speed reducer 1a the electric drive system 1 in one or more embodiments of the present disclosure. FIG. 2 is an exploded view of the speed reducer 1a according to one or more embodiments of the present disclosure. FIG. 3 is an exploded view of a filter assembly of the speed reducer 1a in FIG. 1. FIG. 4 is a schematic structural diagram of the filter assembly in FIG. 3. With reference to FIG. 1, FIG. 3, and FIG. 3, the speed reducer 1a of the embodiments includes: a right housing 10, a left housing 20, and a filter assembly 30. The left housing 20 is connected to the right housing 10 to form an oil churning chamber 90. The end face of the left housing 20 facing away from the right housing 10 is provided with an accommodating cavity 201, and the accommodating cavity 201 is in communication with the oil churning chamber 90. The filter assembly 30 is disposed within the accommodating cavity 201 and is detachably connected to the left housing 20.

The left housing 20 is connected to the right housing 10 to form the oil churning chamber 90, and the end face of the left housing 20 facing away from the right housing 10 is provided with the accommodating cavity 201. The accommodating cavity 201 is in communication with the oil churning chamber 90, and the filter assembly 30 is disposed within the accommodating cavity 201 and is detachably connected to the left housing 20. Therefore, when it is necessary to filter lubricating oil, the lubricating oil enters the accommodating cavity 201 from the oil churning chamber 90 and is filtered by the filter assembly 30 within the accommodating cavity 201. The cavity wall of the accommodating cavity 201 can be used as the outer housing of the filter assembly 30, and the accommodating cavity 201 accommodates the filter assembly 30 to protect the filter assembly 30 and provide installation space for the filter assembly 30. Compared with an externally-mounted filter element, the space occupied by the filter assembly 30 in the speed reducer 1a is reduced, the space utilization rate is improved, and the volume of the right housing 10 is reduced.

Since the filter assembly 30 is detachably connected to the left housing 20, and the filter assembly 30 needs to be replaced after the vehicle has traveled for a specified mileage or a specified time, the old filter assembly 30 is detached from the left housing 20 and taken out of the accommodating cavity 201, and then the new filter assembly 30 is placed into the accommodating cavity 201 and connected to the left housing 20. The operation is simple and convenient. Compared with the externally-mounted filter element, there is no need to replace the outer housing of the externally-mounted filter element, and only the filter assembly 30 needs to be replaced, reducing the replacement cost of the filter assembly 30.

With reference to FIG. 1, in some embodiments, in order to ensure the volume of the accommodating cavity 201, the left housing 20 is provided with an input-shaft mounting position 202, an intermediate-shaft mounting position 203, and an output-shaft mounting position 204. The accommodating cavity 201 is disposed between the input-shaft mounting position 101 and the output-shaft mounting position 204, and is located above the intermediate-shaft mounting position 203, so that the accommodating cavity 201 has sufficient space to accommodate the filter assembly 30.

In some embodiments, an input shaft will be mounted at the input-shaft mounting position 202, and an input-shaft gear set 209a will be mounted on the input shaft. An intermediate shaft will be mounted at the intermediate-shaft mounting position 203, and an intermediate-shaft gear set 209b will be mounted on the intermediate shaft. An output shaft will be mounted at the output-shaft mounting position 204, and an output-shaft gear set 209c will be mounted on the output shaft. The space at the junction area of the input-shaft gear set 209a, the intermediate-shaft gear set 209b and the output-shaft gear set 209c is relatively large, and can provide space to accommodate the filter assembly 30, so that the accommodating cavity 201 has enough space to accommodate the filter assembly 30, making full use of the space within the left housing 20 and the right housing 10, without increasing the size of the speed reducer 1a. The cost is reduced, and meanwhile the aesthetic appearance of the speed reducer 1a is also ensured.

With reference to FIG. 1, FIG. 3, and FIG. 4, in some embodiments, in order to accommodate the filter assembly 30, the left housing 20 includes a main body 205 and a mounting member 206. The main body 205 is connected to the right housing 10. The mounting member 206 is disposed on the end face of the main body 205 facing away from the right housing 10 and is integrally formed with the main body 205. The mounting member 206 is provided with the accommodating cavity 201. Among them, the main body 205 and the mounting member 206 may be integrally formed by casting.

In some embodiments, when it is necessary to filter the lubricating oil, the lubricating oil enters the accommodating cavity 201 from the oil churning chamber 90 and is filtered by the filter assembly 30 within the accommodating cavity 201. The mounting member 206 can be used as the outer housing of the filter assembly 30, and the accommodating cavity 201 accommodates the filter assembly 30 to protect the filter assembly 30 and provide installation space for the filter assembly 30. Compared with the externally-mounted filter element, the space occupied by the filter assembly 30 in the speed reducer 1a is reduced, the space utilization rate is improved, and the volume of the right housing 10 is reduced.

With reference to FIG. 3 and FIG. 4, in some embodiments, in order to achieve the filtering of the lubricating oil, the filter assembly 30 includes: a filter member 301 and a closure member 302. The filter member 301 is disposed within the accommodating cavity 201. The closure member 302 is detachably connected to the left housing 20 and blocks off the end of the accommodating cavity 201 facing away from the right housing 10. In some embodiments, the filter member 301 may be of a structure such as filter paper or a filter element.

In some embodiments, after the lubricating oil enters the accommodating cavity 201, the filter member 301 performs filtration on the lubricating oil. The end of the accommodating cavity 201 facing away from the right housing 10 is blocked off by the closure member 302, to avoid leakage of the lubricating oil.

In some embodiments, after the vehicle has traveled for a specified mileage or a specified time, if the filter assembly needs to be replaced, the closure member 302 can be detached from the left housing 20 to expose the old filter member 301. The old filter member 301 is taken out of the accommodating cavity 201, and the new filter member 301 is placed into the accommodating cavity 201. After that, the closure member 302 is mounted on the left housing 20. This replacement method is simple and convenient to operate. Compared with the externally-mounted filter element, there is no need to replace the outer housing of the externally-mounted filter element, and only the filter member 301 needs to be replaced, reducing the replacement cost of the filter assembly 30.

In some embodiments, in order to ensure that the filter member 301 fully filters the lubricating oil, the length of the filter member 301 matches the length of the accommodating cavity 201, that is, all the lubricating oil entering the accommodating cavity 201 will pass through the filter member 301, so that the filter member 301 can filter all the lubricating oil entering the accommodating cavity 201.

In some embodiments, the closure member 302 is connected to the end face of the mounting member 206 of the left housing 20 facing away from the right housing 10 to block off the end of the accommodating cavity 201 facing away from the right housing 10.

With reference to FIG. 3 and FIG. 4, in some embodiments, the outer wall of the mounting member 206 is provided with at least two first mounting bases 2061, and the circumferential surface of the closure member 302 is provided with at least two second mounting bases 3021. The at least two second mounting bases 3021 correspond one-to-one to the at least two first mounting bases 2061. A connecting member 40 is disposed to pass through the second mounting base 3021 and connected to the corresponding first mounting base 2061, to achieve the connection between the mounting member 206 and the closure member 302, and meanwhile also to facilitate the disassembly and assembly between the first mounting base 2061 and the second mounting base 3021. In some embodiments, the connecting member 40 may be one of a bolt, a screw, or a connecting pin.

In some embodiments, the first mounting base 2061 is provided with a first through hole, and the second mounting base 3021 is provided with a second through hole. The connecting member 40 is disposed to pass through the first through hole and connected to the second through hole, to ensure the stability of the connection between the first mounting base 2061 and the second mounting base 3021, and meanwhile also to facilitate the disassembly and assembly between the first mounting base 2061 and the second mounting base 3021.

In some embodiments, in order to ensure the stability of the connection between the closure member 302 and the mounting member 206, the number of the second mounting bases 3021 may be two or more, and the number of the first mounting bases 2061 may be two or more. In order to reduce the cost, the number of the second mounting bases 3021 may be three, and the number of the first mounting bases 2061 may be three.

With reference to FIG. 3 and FIG. 4, in some embodiments, the cross-sectional shape of the filter member 301 is annular. The left housing 20 is provided with a first limiting member 50, and the first limiting member 50 is disposed within the accommodating cavity 201. The filter member 301 is partially sleeved on the first limiting member 50, and the position of the filter member 301 is limited by the first limiting member 50 to prevent the position of the filter member 301 within the accommodating cavity 201 to change, so that the filter member 301 can stably filter the lubricating oil entering the accommodating cavity 201, thereby improving the stability of the filter member 301 installed within the accommodating cavity 201.

With reference to FIG. 3 and FIG. 4, in some embodiments, the length of the first limiting member 50 is less than the length of the filter member 301, that is, the first limiting member 50 will only block a part of the filter member 301, allowing the part of the filter member 301 that is unblocked by the first limiting member 50 to filter the lubricating oil entering the accommodating cavity 201. This can reduce the interference by the first limiting member 150 with the filtering performed by the filter member 301 on the lubricating oil entering the accommodating cavity 201. In some embodiments, the first limiting member 50 may be a boss protruding from the surface of the left housing 20 facing away from the right housing 10.

In some embodiments, the first limiting member 50 and the left housing 20 are integrally formed, which can reduce the difficulty of processing and meanwhile improve the stability of the fixed connection between the first limiting member 50 and the left housing 20.

With reference to FIG. 4, in some embodiments, in order to facilitate the connection of the closure member 302 with the left housing 20, a limiting groove 207 is provided on the end face of the left housing 20 facing away from the right housing 10. The limiting groove 207 is coaxial with the accommodating cavity 201. The closure member 302 is provided with a second limiting member 60, and the second limiting member 60 may be embedded within the limiting groove 207. Specifically, the limiting groove 207 is provided on the end face of the mounting member 206 of the left housing 20 facing away from the right housing 10. In some embodiments, the cross-sectional shape of the limiting groove 207 may be annular, and the cross-sectional shape of the second limiting member 60 may be annular.

In some embodiments, the second limiting member 60 may be a boss protruding from the surface of the closure member 302 facing the left housing 20, meaning that the second limiting block 60 and the closure member 302 can be integrally formed to ensure a secure connection between the second limiting member 60 and the closure member 302.

In some embodiments, when the closure member 302 is to be mounted on the left housing 20, the second limiting member 60 is embedded within the limiting groove 207 to position and limit the closure member 302, so as to facilitate the connection between the closure member 302 and the left housing 20.

With reference to FIG. 4, in some embodiments, the closure member 302 and the mounting member 206 of the left housing 20 adopt a step joint (or spigot joint or rabbet joint). That is, the limiting groove 207 may serve as a female recess, and the second limiting member 60 may serve as a male protrusion. The cooperation between the second limiting member 60 and the limiting groove 207 can ensure the sealing performance between the closure member 302 and the mounting member 206 of the left housing 20, reducing the possibility of leakage of the lubricating oil.

With reference to FIG. 4, in some embodiments, in order to further ensure the sealing performance between the closure member 302 and the left housing 20, a sealing member 70 is disposed between the closure member 302 and the left housing 20. The sealing member 70 seals the gap between the closure member 302 and the left housing 20 to prevent the leakage of the lubricating oil. In some embodiments, the sealing member 70 may be a sealing ring or sealing adhesive.

In some embodiments, in order to further ensure the sealing performance between the closure member 302 and the left housing 20, the sealing member 70 may be disposed within the limiting groove 207.

With reference to FIG. 4, in some embodiments, in order to ensure that the filter member 301 can fully filter the lubricating oil entering the accommodating cavity 201, the cross-sectional shape of the filter member 301 is annular. The left housing 20 is provided with an oil inlet 208 and an oil outlet. The oil inlet 208 is in communication with the accommodating cavity 201 and the oil churning chamber 90. One of the oil inlet 208 and the oil outlet is located outside the filter member 301, and the other is located inside the filter member 301. Among them, the oil outlet is in communication with the inner cavity of a motor housing 80.

In some embodiments, the lubricating oil within the oil churning chamber 90 enters the accommodating cavity 201 through the oil inlet 208, and then transported to the inner cavity of the motor housing 80 through the oil outlet after being filtered by the filter member 301, so as to achieve that the filter member 301 can fully filter the lubricating oil entering the accommodating cavity 201 and guarantee the cleanliness of the lubricating oil.

In some embodiments, the oil inlet 208 may be located outside the filter member 301, and the oil outlet may be located inside the filter member 301. Of course, in some other embodiments, the oil outlet may be located outside the filter member 301, and the oil inlet 208 may be located inside the filter member 301.

Based on the same disclosed concept, the present disclosure also proposes an electric drive system 1, which adopts the described speed reducer 1a. For the specific structure of the speed reducer 1a, reference can be made to the above-mentioned embodiments. Since the top plate structure adopts all the technical solutions of all the above-mentioned embodiments, it at least has all the beneficial effects brought by the technical solutions of the above-mentioned embodiments, which will not be repeated here.

With reference to FIG. 1, in some embodiments, the electric drive system 1 further includes the motor housing 80. The motor housing 80 is connected to the right housing 10, that is, the motor housing 80 is disposed on the side of the right housing 10 away from the left housing 20. In other words, the right housing 10 is disposed between the motor housing 80 and the left housing 20. The motor housing 80 is in communication with the oil churning chamber 90. The lubricating oil within the oil churning chamber 90 enters the accommodating cavity 201 through the oil inlet 208, and is transported into the inner cavity of the motor housing 80 through the oil outlet after being filtered by the filter member 301 to achieve cooling of the motor within the motor housing 80, and then enters the oil churning chamber 90.

In some embodiments, the electric drive system 1 further includes a drive motor 1b and an electronic control structure 1c. The drive motor 1b is installed inside the motor housing 80, and the electronic control structure 1c is installed outside the motor housing 80. The electronic control structure 1c is electrically connected to the drive motor 1b to control the start and stop of the drive motor 1b.

Based on the same disclosed concept, the present disclosure also proposes a vehicle, which adopts the described electric drive system 1. For the specific structure of the electric drive system 1, reference can be made to the above-mentioned embodiments. Since the top plate structure adopts all the technical solutions of all the above-mentioned embodiments, it at least has all the beneficial effects brought by the technical solutions of the above-mentioned embodiments, which will not be repeated here.

In the description of the present disclosure, it should be understood that the orientations or positional relationships indicated by the terms such as "center", "longitudinal", "lateral", "length", "width", "thickness", "on", "below", "front", "back", "left", "right", "vertical", "horizontal", "top", "bottom", "inside", "outside", "clockwise", "counterclockwise" and the like are based on the orientations or positional relationships shown in the accompanying drawings. They are only used for the convenience of describing the present disclosure and simplifying the description, and do not indicate or imply that the device or element referred to must have a specific orientation, be constructed and operated in a specific orientation, and therefore they should not be understood as limitations to the present disclosure.

In the description of the present disclosure, unless otherwise explicitly specified and limited, a first feature being "on" or "below" a second feature may include the first and second features being in direct contact, or the first and second features being in contact not directly but through another feature between them. Moreover, the first feature being "on", "above", or "over" the second feature includes the first feature being directly above or obliquely above the second feature, or merely indicates that the horizontal height of the first feature is higher than that of the second feature. The first feature being "below", "under", or "beneath" the second feature includes the first feature being directly below or obliquely below the second feature, or merely indicates that the horizontal height of the first feature is less than that of the second feature.

In the description of this specification, the descriptions referring to terms such as "one embodiment", "some embodiments", "example", "specific example", or "some examples" mean that the specific features, structures, materials, or characteristics described in connection with the embodiment(s) or example(s) are included in at least one embodiment or example of the present disclosure. In this specification, the schematic descriptions of the above terms do not necessarily refer to the same embodiment or example. Furthermore, the specific features, structures, materials, or characteristics described may be combined in any suitable manner in any one or more embodiments or examples. In addition, persons skilled in the art can combine and integrate different embodiments or examples described in this specification.

Although the preferred embodiments of the present disclosure have been described, additional changes and modifications may be made to these embodiments once persons skilled in the art understand the basic inventive concepts. Therefore, it is intended that the appended claims be interpreted as including the preferred embodiments and all changes and modifications that fall within the scope of the present disclosure.

Obviously, persons skilled in the art can make various changes and variations to the present disclosure without departing from the spirit and scope of the present disclosure. Thus, if these modifications and variations of the present disclosure fall within the scope of the claims of the present disclosure and their equivalent technologies, the present disclosure is also intended to include these changes and variations.

## Claims

1. A speed reducer, comprising:
a right housing;
a left housing, connected to the right housing to form an oil churning chamber, wherein an end face of the left housing facing away from the right housing is provided with an accommodating cavity, and the accommodating cavity is in communication with the oil churning chamber; and
a filter assembly, disposed within the accommodating cavity and detachably connected to the left housing.

2. The speed reducer according to claim 1, wherein the left housing is provided with an input-shaft mounting position, an intermediate-shaft mounting position, and an output-shaft mounting position, and the accommodating cavity is disposed between the input-shaft mounting position and the output-shaft mounting position, and is located above the intermediate-shaft mounting position.

3. The speed reducer according to claim 1, wherein the left housing comprises:
a main body, connected to the right housing; and
a mounting member, disposed on an end face of the main body facing away from the right housing and integrally formed with the main body, the mounting member being provided with the accommodating cavity.

4. The speed reducer according to any one of claims 1 to 3, wherein the filter assembly comprises:
a filter member, disposed within the accommodating cavity;
a closure member, detachably connected to the left housing and blocking off an end of the accommodating cavity facing away from the right housing.

5. The speed reducer according to claim 4, wherein a cross-sectional shape of the filter member is annular; the left housing is provided with a first limiting member; the first limiting member is disposed within the accommodating cavity, and the filter member is partially sleeved on the first limiting member.

6. The speed reducer according to claim 4, wherein a limiting groove is provided on the end face of the left housing facing away from the right housing; the limiting groove is coaxial with the accommodating cavity; the closure member is provided with a second limiting member, and the second limiting member is capable of being embedded within the limiting groove.

7. The speed reducer according to claim 4, wherein a sealing member is provided between the closure member and the left housing.

8. The speed reducer according to claim 4, wherein a cross-sectional shape of the filter member is annular; the left housing is provided with an oil inlet and an oil outlet, and the oil inlet is in communication with the accommodating cavity and the oil churning chamber, wherein one of the oil inlet and the oil outlet is located outside the filter member, and the other is located inside the filter member.

9. An electric drive system, comprising the speed reducer according to any one of claims 1 to 8.

10. A vehicle, comprising the electric drive system according to claim 9.
